# FASCICULE DE BREVET EUROPEEN

(11) **EP 2 978 089 B1**
(45) Date de publication et mention de la délivrance du brevet: **26.07.2023**
(21) Numéro de dépôt: 15305978.7
(22) Date de dépôt: 24.06.2015
(51) Int. Cl.: H02G 3/04, H02G 3/22

(54) **GOULOTTE**
RINNE
CHUTE

(30) Priorité: 25.07.2014 FR 1457230
(43) Date de publication de la demande: 27.01.2016
(73) Titulaire: Legrand France, 87000 Limoges (FR); Legrand SNC, 87000 Limoges (FR)
(72) Inventeur: LOCHET, Anthony, 72170 Meurcé (FR); BUARD, Yvon, 53600 Voutre (FR)
(74) Mandataire: Jacobacci Coralis Harle

(56) Documents cités:
- EP-A2- 1 075 985
- EP-A2- 1 782 937
- WO-A1-02/11261
- CN-A- 103 591 384
- DE-U1- 20 108 261
- FR-A5- 2 098 636
- US-A1- 2010 258 686
- US-B1- 6 448 497

## Description

### DOMAINE TECHNIQUE AUQUEL SE RAPPORTE L'INVENTION

La présente invention concerne, de manière générale, les goulottes du type de celles mises en oeuvre, par exemple, pour le support, le logement et la protection de divers appareillages, tels que des appareillages électriques, aussi bien que pour le support, le logement et la protection des câbles, conducteurs, canalisations ou autres équipements nécessaires à la desserte de ces appareillages.

### ARRIERE PLAN TECHNOLOGIQUE

Usuellement, une goulotte comprend un socle pourvu d'un fond et de deux ailes latérales qui s'élèvent à partir du fond le long de ses deux bords longitudinaux.

Le document EP 1 782 937 A1, par exemple, décrit un socle comprenant un profilé intérieur en matière plastique rigide sur lequel est repliée une feuille d'aluminium pour former un profilé extérieur métallique.

Le document WO 02/11261 A1 décrit également un socle comportant un profilé extérieur métallique, recouvert d'une couche de plastique rigide renforçant la rigidité du socle.

On connait par ailleurs du document US 2010/258686 A1 un dispositif de guidage de câble formant également un canal en U destiné à recevoir des câbles, mais dont le corps principal dans lequel est formé le canal est en matière souple, en l'occurrence en élastomère flexible. Ce corps principal en matière élastique est renforcé par un insert rigide en laiton.

On connait du document EP 1 075 985 A2 un revêtement de sol pour habitacle de véhicule automobile, dont le corps principal est formé lui aussi en matière souple, en l'occurrence en mousse élastique souple. Ce corps principal délimite notamment un canal en U, destiné à recevoir des câbles, et est renforcé par un insert rigide.

Le document CN103591384 A divulgue une goulotte en forme de croix, dont les parois latérales sont terminées par des moyens de montage d'un couvercle. La goulotte est recouverte d'une couche anticorrosion ce qui laisse entendre qu'elle est réalisée en métal.

Enfin, le document DE 201 08 261 U1 décrit un socle sur le fond duquel est tendue une plaque isolante au dessus d'organes de fixation traversant le socle pour isoler ces organes de l'espace intérieur du socle.

Pour fixer le socle d'une goulotte à une paroi de réception, réalisée en briques, en parpaings, en béton ou en plâtre, les installateurs utilisent actuellement des outils de fixation de plus en plus puissants comme des agrafeuses, des machines pneumatiques ou électriques à clouer ou à frapper dont la force de percussion permet de transpercer notamment le fond du socle avec un organe de fixation tel qu'une agrafe ou un clou, qui vient s'ancrer dans la paroi de réception.

Ces outils de fixation permettent à un installateur de gagner du temps, puisqu'à l'aide d'un de ces outils, il peut directement fixer le socle d'une goulotte à la paroi de réception sans qu'il soit nécessaire qu'il réalise un pré-perçage du fond du socle de la goulotte pour y introduire une cheville de fixation.

Cependant, les socles de goulotte sont des profilés réalisés en matière rigide et il n'est pas rare qu'ils cassent sous l'impact de ces outils de fixation à percussion.

### OBJET DE L'INVENTION

Afin de remédier à l'inconvénient précité, l'invention propose une goulotte telle que définie par la revendication 1.

De manière remarquable, la couche de matière souple prévue par l'invention permet d'amortir les chocs lors des percussions des outils de fixation et d'éviter ainsi la casse du fond du socle de la goulotte.

D'autres caractéristiques non limitatives et avantageuses de la goulotte conforme à l'invention sont définies par les revendications 2 à 8.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue schématique en perspective d'une extrémité d'un socle d'un premier mode de réalisation d'une goulotte conforme à l'invention ;
- la figure 2 est une vue de face d'une extrémité du premier mode de réalisation de la goulotte selon l'invention ;
- la figure 3 est une vue de détail de la zone A des figures 2 et 9 ;
- la figure 4 est une vue schématique en perspective d'une extrémité d'un socle d'un deuxième mode de réalisation d'une goulotte conforme à l'invention ;
- la figure 5 est une vue schématique en perspective d'une extrémité d'un socle d'un troisième mode de réalisation d'une goulotte conforme à l'invention ;
- la figure 6 est une vue schématique en perspective d'une extrémité d'un socle d'un quatrième mode de réalisation d'une goulotte conforme à l'invention ;
- la figure 7 est une vue de face d'une extrémité du deuxième mode de réalisation de la goulotte selon l'invention ;
- la figure 8 est une vue de face d'une extrémité du troisième mode de réalisation de la goulotte selon l'invention ;
- la figure 9 est une vue de face d'une extrémité du quatrième mode de réalisation de la goulotte selon l'invention ;
- la figure 10 est une vue schématique en perspective d'une extrémité d'un socle d'un cinquième mode de réalisation d'une goulotte conforme à l'invention ; et
- la figure 11 est une vue partielle de détail d'un sixième mode de réalisation d'une goulotte conforme à l'invention ;

En préliminaire, on notera que d'une figure à l'autre les éléments identiques et/ou similaires des différents modes de réalisation de l'invention, seront dans la mesure du possible référencés par les mêmes signes de référence et ne seront pas décrits à chaque fois.

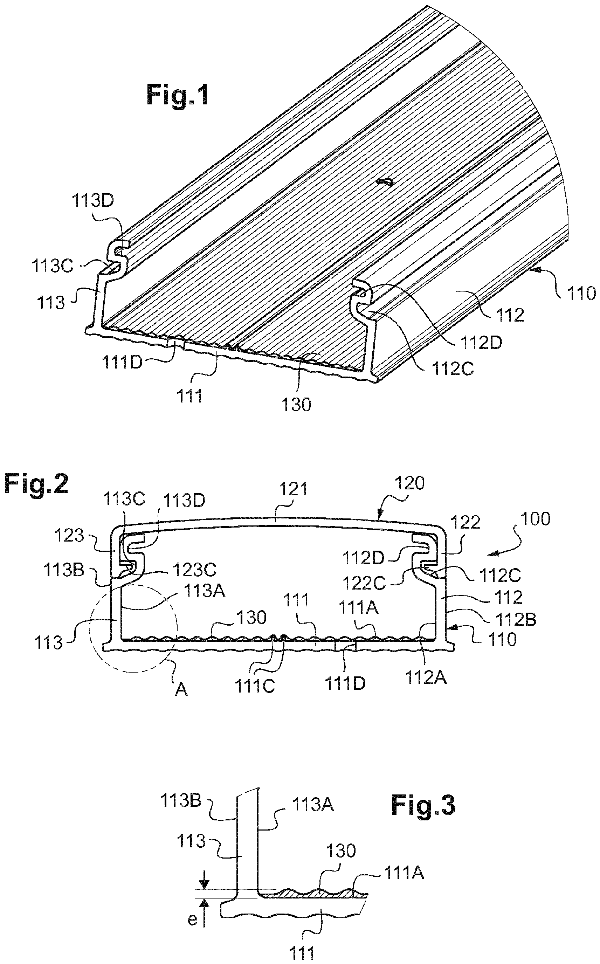

Sur les figures 1 à 11 on a représenté six modes de réalisation d'une goulotte 100 électrique. Ces modes de réalisation se distinguent des uns des autres notamment par le fait que les goulottes 100 présentent des largeurs différentes et qu'elles incorporent ou non une ou plusieurs cloisons intérieures séparant le volume intérieur du socle en plusieurs espaces de circulation de câbles et/ou conducteurs électriques.

Chaque goulotte 100 comprend un socle 110 profilé en matière thermoplastique rigide avec une ouverture longitudinale fermée par un couvercle 120.

Plus particulièrement, comme le montrent les figures 1, 4, 5, 6 et 10, le socle 110 de chaque goulotte 100 est pourvu d'un fond 111 et de deux ailes latérales 112, 113 qui s'élèvent à partir du fond 111 le long de ses deux bords longitudinaux.

Ici, le socle 110 présente une section en U et les deux ailes latérales 112, 113 s'étendent perpendiculairement au fond 111. Le fond 111 est alors destiné à être fixé sur une paroi de réception verticale (non représentée).

En variante, on pourrait prévoir, pour une goulotte d'angle, à positionner dans un angle, à la jonction d'une paroi de réception verticale et d'un plafond ou à la jonction de deux parois de réception verticales, que le socle présente une section globalement en V avec deux ailes latérales qui s'étendent de manière divergente l'une par rapport à l'autre, en oblique par rapport au fond.

Du fait du caractère rigide de la matière thermoplastique qui le forme, ce socle 110 est adapté notamment à supporter ou loger divers appareillages, tels que des appareillages électriques, ainsi que des câbles, conducteurs, canalisations ou autres équipements nécessaires à la desserte de ces appareillages.

Par ailleurs, l'utilisation d'une matière thermoplastique rigide permet de bénéficier de ce caractère rigide, tout en assurant une bonne ouvrabilité du socle 110, permettant à un installateur de le retailler ou de le transpercer, par exemple avec un organe de fixation (un clou ou une agrafe).

Chaque aile latérale 112, 113 comporte une partie supérieure libre (à l'opposé de son pied attaché au fond 111) formant des moyens de montage du couvercle 120.

Plus précisément, selon les modes de réalisations représentés, chaque aile latérale 112, 113 comporte une partie supérieure libre présentant un profil en S. Ce profil en S définit, le long de l'ouverture longitudinale du socle 110, une gorge extérieure longitudinale 112C, 113C, en renfoncement de la face externe 112B, 113B de l'aile latérale 112, 113 correspondante, qui s'ouvre vers l'extérieur du socle 110, et qui forme lesdits moyens de montage du couvercle 120. Ce profil en S définit également, le long de l'ouverture longitudinale du socle 110, une gorge intérieure longitudinale 112D, 113D qui s'ouvre vers l'intérieur du socle 110.

Ainsi, le socle 110 comporte à l'avant, à l'extérieur, deux gorges extérieures longitudinales 112C, 113C ouvertes dans des directions opposées, et à l'intérieur, deux gorges intérieures longitudinales 112D, 113D ouvertes l'une vers l'autre.

Les deux gorges intérieures longitudinales 112D, 113D sont avantageusement utilisées pour accrocher en travers de l'ouverture longitudinale du socle 110, des agrafes (non représentées) qui retiennent les câbles ou les conducteurs électriques à l'intérieur du socle 110 fixé sur la paroi de réception verticale (non représentée).

Comme le montrent les figures 2, 7, 8 et 9, le couvercle 120 comprend une paroi de fermeture 121 longitudinale dont les deux côtés longitudinaux se raccordent continûment à deux bords tombants longitudinaux 122, 123 parallèles. Chaque bord tombant longitudinal 122, 123 porte une bande de clipsage 122C, 123C qui s'étend en saillie de la face interne du bord tombant 122, 123, perpendiculairement à cette face interne, en direction de l'autre bord tombant 122, 123. Lorsque le couvercle 120 est rapporté sur le socle 110, sa paroi de fermeture 121 couvre l'ouverture longitudinale du socle 110 et ses bords tombants longitudinaux 122, 123 recouvrent la face externe des parties supérieures libres des ailes latérales 112, 113 du socle 110 de sorte que les bandes de clipsage 122C, 123C du couvercle 120 se clipsent ou s'accrochent dans les gorges extérieures longitudinales 112C, 113C du socle 110.

Dans une variante non représentée de l'un quelconque des six modes de réalisation décrits ici, le couvercle de la goulotte n'est pas, comme décrit ci-dessus, un couvercle dit « recouvrant » (avec deux bords tombants recouvrant une partie de la face externe des ailes latérales du socle) mais un couvercle dit « affleurant » avec une paroi de fermeture aux côtés longitudinaux droits libres, qui porte sur sa face interne, tournée vers le fond du socle, deux languettes de clipsage qui courent le long des deux bords longitudinaux de la paroi de fermeture et qui comprennent une ou plusieurs dents de clipsage destinées à se clipser ou à s'accrocher à l'intérieur du socle, sous des nervures portées par la face interne des ailes latérales du socle et formant lesdits moyens de montage du couvercle.

La face interne 111A du fond 111 du socle 110 peut comprendre également (c'est le cas des modes de réalisations représentés sur les figures 2, 6, 8, 9 et 10) des nervures 111C longitudinales qui notamment forment par paires des moyens de maintien d'une cloison intérieure 140 qui sépare le volume intérieur du socle en plusieurs espaces de circulation de câbles ou de conducteurs électriques.

Le socle 110 et le couvercle 120 sont deux profilés réalisés préférentiellement par extrusion d'une matière thermoplastique rigide. Une des matières thermoplastiques rigides couramment utilisée est le PVC rigide (polychlorure de vinyle rigide).

Selon une caractéristique remarquable de chaque goulotte 100, une couche 130 de matière souple est appliquée sur au moins une partie de la face interne 111A du fond 111 du socle 110, tournée vers les ailes latérales 112, 113. Cette couche 130 recouvre ainsi la partie correspondante de la face interne 111A du fond 111 du socle 110 en étant en contact avec celle-ci. Cette couche 130 de matière souple forme avantageusement une couche amortissante qui absorbe les chocs de percussion des outils de fixation qui sont utilisés par les installateurs pour clouer ou agrafer le socle 110 de la goulotte 100 à la paroi de réception. Elle permet alors d'éviter la casse du fond 111 du socle 110 soumis à la force de percussion de l'outil de fixation. Le clouage ou l'agrafage du socle 110 à la paroi de réception se fait généralement au travers de perforations 111D qui traversent la couche 130 de matière souple et le fond 111 du socle 110. Ces perforations 111D de forme circulaire ou oblongue sont réparties tout du long du socle 110. Mais si l'installateur souhaite transpercer le fond 111 du socle 110 de la goulotte 100 avec un organe de fixation (un clou ou une agrafe) à un endroit situé en dehors de ces perforations 111D, la couche 130 de matière souple forme un tapis antidérapant qui permet avantageusement d'accrocher légèrement la pointe de l'organe de fixation pour éviter tout dérapage ou glissement de cette pointe, ce qui facilite l'opération de fixation à l'utilisateur.

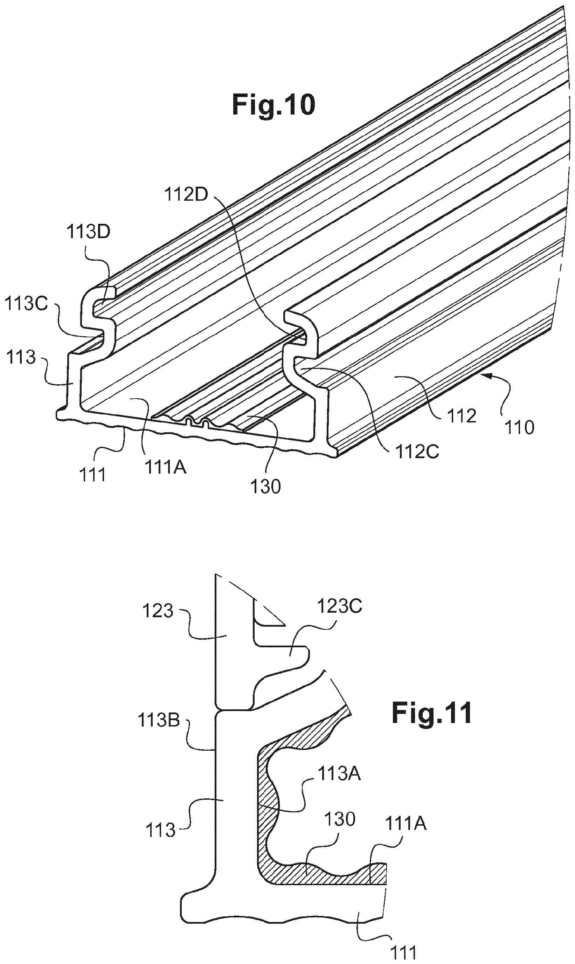

Selon les modes de réalisation représentés sur les figures 1 à 9, la couche 130 de matière souple est appliquée sur la totalité de la face interne 111A du fond 111 du socle 110. Selon la variante représentée sur la figure 10, la couche 130 de matière souple est appliquée seulement sur une partie (ici une partie centrale) de la face interne 111A du fond 111 du socle 110. Cette couche 130 de matière souple recouvre les nervures 111C portées par cette face interne 111, qui restent apparentes et permettent la matérialisation de l'axe central du socle 110 pour en faciliter le positionnement sur la paroi de réception.

Comme le montre bien la figure 11, on peut prévoir que la couche 130 de matière souple soit appliquée également sur la face interne 113A des ailes latérales 113 du socle 110. Ceci peut être le cas des goulottes d'angle comportant un socle au profil en V dont les ailes latérales peuvent être fixées par clouage ou agrafage aux parois de réception en angle. La couche de matière souple appliquée sur la face interne des ailes latérales du socle, joue alors le rôle de couche amortissante, antidérapante comme cela a été décrit précédemment et évite la casse éventuelle desdites ailes soumises à la force de percussion d'une cloueuse ou d'une agrafeuse.

Comme le montre plus particulièrement la figure 3, la couche 130 de matière souple présente une épaisseur e comprise préférentiellement entre 0,1 et 5 mm.

La couche 130 de matière souple peut être translucide et/ou présenter une couleur (par exemple rouge, verte, jaune, violette, orange, bleue) différente de celle du socle 110, indicative de certaines caractéristiques (par exemple la largeur et/ou la hauteur) de la goulotte 100.

L'utilisation d'une matière souple colorée et peu translucide pour la couche 130 permet avantageusement de masquer des imperfections du fond et/ou des ailes latérales du socle (comme des petites casses ou des fissures) qui nuisent à l'aspect du produit sans pour cela présenter des risques à l'utilisation.

En outre, les goulottes 100 sont avantageusement identifiables par la couleur de la couche 130 de matière souple appliquée sur le fond 111 de leur socle 110 et l'on peut prévoir que les différents accessoires (comme les accessoires d'angle, les embouts, les dérivations...) spécialement adaptés aux dimensions des goulottes 100, soient identifiés par la même couleur que celle de ladite couche 130.

Préférentiellement, la couche 130 de matière souple vient de formation avec le socle 110 de la goulotte 100 par co-extrusion d'une matière thermoplastique souple, formant la couche 130 de matière souple, et d'une matière thermoplastique rigide formant le socle 110. Mais, elle peut aussi être post-extrudée contre la face interne 111A du fond 111 du socle 110 tournée vers les ailes latérales. Lorsque le socle 110 est réalisé par extrusion de PVC rigide, la couche de matière souple est une couche de PVC souple (polychlorure de vinyle souple) coextrudée avec le PVC rigide du socle ou post-extrudée sur celui-ci. Comme cela est visible sur les figures, la couche 130 présente avantageusement une surface externe en forme de vaguelettes ce qui lui confère un haut pouvoir de friction pour mieux freiner la pointe d'un clou ou d'une agrafe percuté au travers du socle 110. Bien entendu, on pourrait prévoir que cette couche soit complètement plane.

En variante, on peut prévoir que la couche de matière souple est rapportée sur le fond du socle de la goulotte et qu'elle est fixée contre celui-ci au moyen d'un adhésif. Dans ce cas, la couche de matière souple peut être réalisée en différentes matières comme un élastomère tel que du caoutchouc, une silicone, ou une mousse.

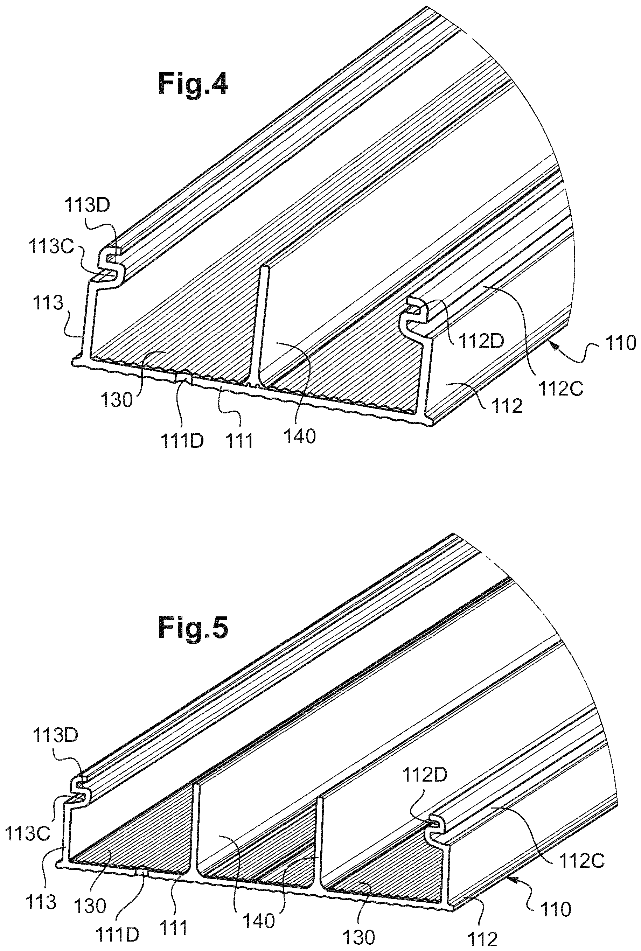

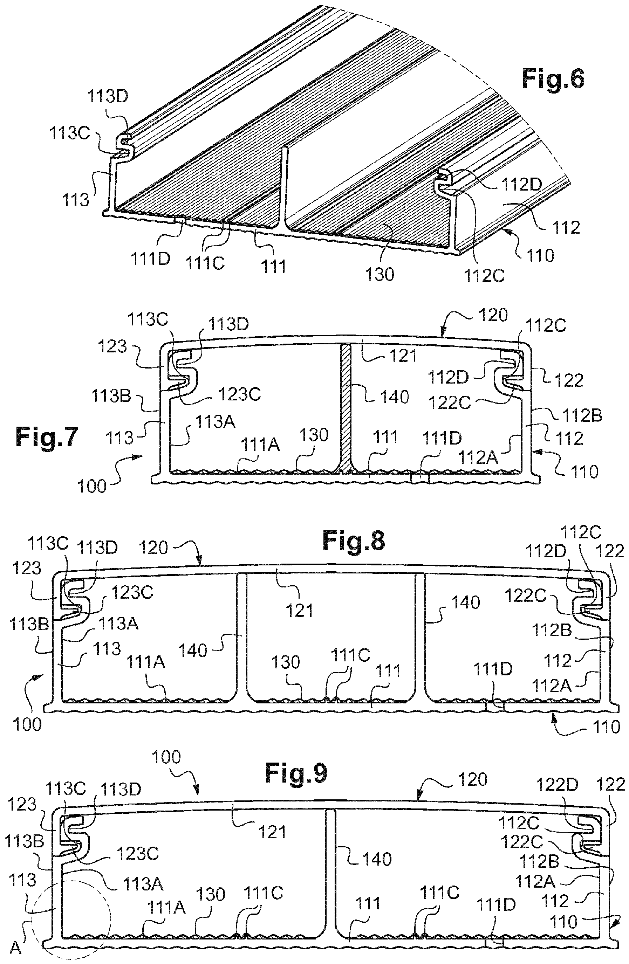

Enfin, comme le montrent les figures 4 à 9, il peut être prévu à l'intérieur du socle 110 une ou plusieurs cloisons intérieures 140 qui séparent le volume intérieur du socle 110 en plusieurs espaces de circulation de câbles et/ou de conducteurs électriques. Avantageusement, selon le mode de réalisation de l'invention représenté sur les figures 4 et 7, la cloison intérieure 140 vient de formation avec la couche 130 de matière souple si bien qu'elle est flexible.

Pour former la cloison intérieure 140 avec la couche 130 de matière souple, il est préférable de réaliser l'ensemble en matière thermoplastique souple (comme le PVC souple) lors d'une opération de post-extrusion après l'extrusion du socle 110 avec la matière rigide.

La cloison intérieure 140 flexible est alors avantageusement capable de se courber élastiquement pour ne pas gêner l'installateur lors de l'opération de fixation du socle 110 à la paroi de réception.

Selon les modes de réalisation de l'invention représentés sur les figures 5, 6, 8 et 9, les cloisons intérieures 140 sont réalisées en matière rigide tout comme le socle 110. Elles viennent avantageusement de formation avec le socle par extrusion d'une matière thermoplastique rigide. Selon des variantes non représentées, elles pourraient également être rapportées sur le fond du socle. La couche 130 de matière souple est alors appliquée sur la face interne 111A du fond 111 de chaque compartiment du socle 110.

Selon les exemples représentés, chaque cloison intérieure 140 s'étend perpendiculairement au fond 111 du socle 110.

Selon une variante non représentée, on peut prévoir que les cloisons intérieures sont des cloisons courbes qui forment deux à deux, entre elles, un conduit de guidage du corps d'un organe de fixation.

Selon une autre variante non représentée, on peut prévoir que chaque cloison intérieure porte en tête des lèvres s'étendant en porte-à-faux pour former des moyens de retenue de câbles ou de conducteurs électriques.

## Revendications

1. Goulotte (100) comprenant un socle (110) profilé en matière thermoplastique rigide pourvu d'un fond (111) et de deux ailes latérales (112,113) qui s'élèvent à partir du fond le long de ses deux bords longitudinaux, chaque aile latérale (112, 113) comportant une partie supérieure libre formant des moyens de montage d'un couvercle (120),
la goulotte comprend une couche (130) amortissante de matière souple :
- qui recouvre au moins une partie de la face interne (111A) du fond (111) du socle (110) tournée vers les ailes latérales (112,113) en étant appliquée sur toute la surface de ladite partie de la face interne (111A) du fond (111) du socle (110) qu'elle recouvre, et
- qui vient de formation avec le socle (110) par extrusion d'une matière thermoplastique ou qui est post-extrudée sur ledit socle (110) et qui est une couche de PVC souple (polychlorure de vinyle souple), ou
- qui est rapportée sur le fond (111) du socle (110) et est fixée sur celui-ci au moyen d'un adhésif, et qui est réalisée en une matière choisie parmi les élastomères tels que du caoutchouc, les silicones, les mousses.

2. Goulotte (100) selon la revendication 1, dans laquelle la couche (130) de matière souple est appliquée sur la totalité de la face interne (111A) du fond (111) du socle (110).

3. Goulotte selon l'une des revendications 1 et 2, dans laquelle la couche de matière souple est appliquée sur la face interne des ailes latérales du socle.

4. Goulotte (100) selon l'une des revendications précédentes, dans laquelle la couche (130) de matière souple présente une épaisseur (e) comprise entre 0,1 et 5 mm.

5. Goulotte (100) selon l'une des revendications précédentes, dans laquelle la couche (130) de matière souple est translucide.

6. Goulotte (100) selon l'une des revendications 1 à 5, dans laquelle la couche (130) de matière souple présente une couleur différente de celle du socle (110), indicative de certaines caractéristiques de la goulotte (100).

7. Goulotte (100) selon l'une des revendications 1 à 6, dans laquelle il est prévu une cloison intérieure (140) séparant le volume intérieur du socle (110) en plusieurs espaces, cette cloison intérieure (140) venant de formation avec la couche (130) de matière souple si bien qu'elle est flexible.

8. Goulotte (100) selon l'une des revendications 1 à 6, dans laquelle il est prévu au moins une cloison intérieure (140) réalisée en une matière rigide, qui sépare le volume intérieur du socle (110) en plusieurs espaces.

## Patentansprüche

1. Rinne (100) mit einem Profilsockel (110) aus steifem thermoplastischem Kunststoff, der mit einem Boden (111) und zwei seitlichen Flügeln (112, 113), die sich vom Boden aus entlang dessen beider seitlichen Längsränder erheben, versehen ist, wobei jeder seitliche Flügel (112, 113) einen freien oberen Teil aufweist, der Montagemittel für einen Deckel (120) bildet,
wobei die Rinne eine dämpfende Schicht (130) aus weichem Material aufweist,
- die mindestens einen Teil der zu den seitlichen Flügeln (112, 113) gerichteten Innenseite (111A) des Bodens (111) des Sockels (110) bedeckt, wobei diese auf die gesamte Oberfläche des Teils der Innenseite (111A) des Bodens (111) des Sockels (110), die sie bedeckt, aufgetragen ist, und
- die durch Extrusion eines thermoplastischen Kunststoffs mit dem Sockel (110) gebildet ist oder die nachträglich auf den besagten Sockel (110) aufgespritzt wird und die eine Schicht weichen PVCs (weichen Polyvinylchlorids) ist, oder
- die auf den Boden (111) des Sockels (110) aufgebracht ist und auf diesem mittels eines Klebemittels befestigt ist und die aus einem Material gefertigt ist, das aus den Elastomeren wie Gummi, den Silikonen, den Schaumstoffen ausgewählt ist.

2. Rinne (100) gemäß Anspruch 1, wobei die Schicht (130) aus weichem Material auf der gesamten Innenseite (111A) des Bodens (111) des Sockels (110) aufgetragen ist.

3. Rinne gemäß einem der Ansprüche 1 und 2, wobei die Schicht aus weichem Material auf der Innenseite der seitlichen Flügel des Sockels aufgetragen ist.

4. Rinne (100) gemäß einem der vorangehenden Ansprüche, wobei die Schicht (130) aus weichem Material eine Dicke (e) zwischen 0,1 und 5 mm aufweist.

5. Rinne (100) gemäß einem der vorangehenden Ansprüche, wobei die Schicht (130) aus weichem Material durchscheinend ist.

6. Rinne (100) gemäß einem der Ansprüche 1 bis 5, wobei die Schicht (130) aus weichem Material eine von der Farbe des Sockels (110) unterschiedliche Farbe aufweist, die für bestimmte Merkmale der Rinne (100) steht.

7. Rinne (100) gemäß einem der Ansprüche 1 bis 6, wobei eine Innenwand (140) vorgesehen ist, die den Innenraum des Sockels (110) in mehrere Bereiche aufteilt, wobei diese Innenwand (140) mit der Schicht (130) aus weichem Material gebildet wird, so daß sie flexibel ist.

8. Rinne (100) gemäß einem der Ansprüche 1 bis 6, wobei mindestens eine aus einem steifen Material gefertigte Innenwand (140) vorgesehen ist, die den Innenraum des Sockels (110) in mehrere Bereiche aufteilt.

## Claims

1. A duct (100) comprising a profiled base (110) of rigid thermoplastic material provided with a bottom (111) and two side wings (112, 113) that rise from the bottom along its two longitudinal edges, each side wing (112, 113) having a free top portion forming means for mounting a cover (120),
Said duct comprises a damping layer (130) of flexible material:
- that covers at least a portion of the inner face (111 a) of the bottom (111) of the base (110) facing towards the side wings (112, 113) while being applied over the entire surface of said portion of the inner face (111 A) of the bottom (111) of the base (110) that it covers; and
- which is formed integrally with the base (110) by extrusion of a thermoplastic material or which is post-extruded on said base (110) and which is a layer of flexible PVC (flexible polyvinyl chloride), or
- which is fitted on the bottom (111) of the base (110) and is fixed thereto by means of an adhesive, and which is made of a material selected from elastomers such as rubber, silicones and foams.

2. The duct (100) according to claim 1, wherein the layer (130) of flexible material is applied over the entire inner face (111A) of the bottom (111) of the base (110).

3. The duct (100) according to claim 1 or claim 2, wherein the layer of flexible material is applied to the inner faces of the side wings of the base.

4. The duct (100) according to any one of the preceding claims, wherein the layer (130) of flexible material has a thickness (e) between 0.1 and 5 mm.

5. The duct (100) according to any one of the preceding claims, wherein the layer (130) of flexible material is translucent.

6. The duct (100) according to any one of claims 1 to 5, wherein the layer (130) of flexible material has a colour different from that of the base (110), indicative of certain features of the duct(100).

7. The duct (100) according to any one of claims 1 to 6, wherein an inner partition (140) dividing the inner volume of the base (110) into a plurality of spaces is provided, said inner partition (140) being formed integrally with the layer (130) of flexible material so that it is flexible.

8. The duct (100) according to any one of claims 1 to 6, wherein at least one inner partition (140) made of a rigid material is provided, which divides the inner volume of the base (110) into a plurality of spaces.
